Europäisches Patentamt

European Patent Office

Office européen des brevets

(11) Numéro de publication: **0 171 340**
A1

## (12) DEMANDE DE BREVET EUROPEEN

(21) Numéro de dépôt: **85440040.5**

(22) Date de dépôt: **11.06.85**

(51) Int. Cl.⁴: **F 24 H 1/44**, F 24 H 9/00

(30) Priorité: **13.06.84 FR 8409363**

(43) Date de publication de la demande: **12.02.86**
**Bulletin 86/7**

(84) Etats contractants désignés: **AT BE CH DE GB IT LI LU NL SE**

(71) Demandeur: **Grué, Christian, 153 A Bis, route nationale, F-57110 Yutz (FR)**

(72) Inventeur: **Grué, Christian, 153 A Bis, route nationale, F-57110 Yutz (FR)**

(74) Mandataire: **Ventavoli, Roger, 2, route d'Uckange, F-57290 Fameck (FR)**

(54) Générateur d'eau chaude à condensation.

㊗ Ce générateur à brûleur à air pulsé comprend, placés à l'horizontale, une enceinte thermique principale (4) suivie en dessous d'un condenseur (5) à tubes d'eau axiaux (33). L'enceinte (4) est partagée en deux compartiments superposés (17, 18) par une cloison à double paroi (25, 26) qui s'arrête avant le fond (16) de l'enceinte pour y ménager un passage (20) de communication.

Le compartiment supérieur (17) forme la chambre de combustion et la chambre d'échange thermique inférieure (18) présente à son extrémité avant une ouverture (24) de sortie des fumées vers le condenseur.

Des turbulateurs plans amovibles (41) sont prévus dans les compartiments (17 et 18).

Ce générateur peut être facilement réalisé en deux versions: production d'eau chaude sanitaire en direct ou chaudière de chauffage central.

EP 0 171 340 A1

0171340

## GENERATEUR D'EAU CHAUDE A CONDENSATION

La présente invention concerne un générateur d'eau chaude à condensation pour combustibles fluides (fuel ou gaz) qui peut être utilisé de façon polyvalente, aussi bien pour la production directe d'eau chaude sanitaire, qu'en tant que chaudière de chauffage central.

Pour une meilleure clarté de l'exposé, on se référencera par la suite uniquement à la variante de réalisation de type "chaudière".

Une chaudière à condensation, quelqu'en soit le type, est d'abord un appareil thermique à la fois générateur et échangeur de chaleur , comprenant essentiellement une chambre de combustion(ou foyer) équipée d'un brûleur et dans laquelle brûle le combustible en développant une flamme rayonnante. Une enveloppe extérieure entoure à distance la chambre de combustion de manière à définir un espace destiné à être rempli d'un liquide, généralement de l'eau, qui s'échauffe au contact de la surface d'échange thermique que constitue la paroi de la chambre de combustion.

Dans le cas d'une chaudière de chauffage central, l'eau chauffée circule en circuit fermé dans un réseau de radiateurs où elle se refroidit avant de retourner à la chaudière.

Les chaudières avec production d'eau chaude comportent en plus un ballon d'eau sanitaire incorporé, ou un serpentin, dont le chauffage est assuré indirectement par l'intermédiaire de la masse d'eau destinée au réseau de chauffage.

Qu'ils soient avec ou sans production d'eau chaude sanitaire, ces appareils produisent des fumées qui quittent la chambre de combustion par un conduit relié à une cheminée d'évacuation à l'atmosphère.

Une chaudière à condensation est une chaudière particulière dans laquelle la chambre de combustion est suivie par un échangeur destiné à récupérer la chaleur des fumées de combustion avant qu'elles n'atteignent la cheminée d'évacuation de manière à les refroidir jusqu'à une température inférieure à leur point de rosée.

A la connaissance de l'inventeur, les chaudières à condensation actuellement proposées sur le marché sont, en grande majorité, équipées de brûleur à gaz à rampe atmosphérique, ce qui limite leur puissance et impose une circulation erticale des fumées par simple

convection naturelle.

L'état de la technique présente cependant quelques chaudières à condensation à brûleur à air pulsé. On pourra en trouver quelques exemples dans la description du brevet français n° 2508608 ou de la demande de brevet européen publiée sous le numéro 0022125.

Toutefois, ces appareils restent souvent conçus comme des chaudières classiques dans lesquelles on se contente d'intégrer un condenseur. En particulier, la circulation des fumées chaudes s'opère à contre courant de la flamme dans un même pot à fond fermé constituant la chambre à combustion. Ce type de réalisation est mal adapté à une efficacité thermique maximale recherchée pour les chaudières à condensation, car les fumées forment écran au rayonnement de la flamme sur la paroi de la chambre.

En outre, les fumées qui quittent la chambre sont inutilement surchauffées, puisqu'il faut ensuite les refroidir jusqu'en dessous de leur point de rosée dans le condenseur. Celui-ci, pour être suffisamment efficace, tout en conservant une taille raisonnable, présente en conséquence, une structure très dense, pourvue de nombreuses chicanes (par-exemple une structure du type "nid d'abeilles".

Ce genre de condenseur bride excessivement les fumées et rend souvent la chaudière difficilement compatible avec l'utilisation de combustibles, autres que le gaz, par-exemple des hydrocarbures liquides, comme le fuel domestique, en raison des risques de dépôt de condensats solides et corrosifs sur les parois d'échange qui détériorent la qualité des échanges thermiques et conduisent à une mise au rebut précoce de l'appareil par suite de percées.

On connait par ailleurs, du document FR-E-90607, un générateur d'eau chaude à brûleur à air pulsé dans lequel les fumées produites circulent à contre courant de la flamme dans un compartiment adjacent séparé de la chambre de combustion par une cloison longitudinale. Cependant, ce compartiment est suivi d'un échangeur de chaleur à tubes de fumée qui, en raison des problèmes évoqués dans le paragraphe précédent, est peu compatible avec un appareil thermique à condensation. De la sorte, l'échange thermique dans la chambre de combustion et dans le compartiment adjacent de retour des fumées doit être réglé à un niveau assez bas afin que la tempé-

rature des fumées à l'entrée des tubes de l'échangeur demeure encore suffisamment élevée pour éviter une condensation ultérieure dans les tubes.

La présente invention a pour but de proposer un appareil à condensation qui pallie les inconvénients précités des appareils connus.

A cet effet, l'invention a pour objet un générateur d'eau chaude à condensation à brûleur à air pulsé comprenant une chambre de combustion suivie d'un échangeur de chaleur et une enveloppe extérieure entourant à distance la chambre de combustion et l'échangeur pour définir un espace destiné à contenir le liquide à chauffer, générateur dans lequel la chambre de combustion constitue un premier compartiment d'une enceinte thermique à fond fermé composée de deux compartiments adjacents séparés par une cloison longitudinale qui s'arrête avant le fond de l'enceinte thermique de manière à ménager entre ledit fond et l'extrémité de la cloison un passage de communication des fumées entre les deux compartiments et dans lequel l'enceinte thermique comporte à son extrémité opposée à celle de son fond fermé une ouverture dans la chambre de combustion pour l'installation du brûleur et dans l'autre compartiment une ouverture de sortie pour le passage des fumées de combustion vers l'échangeur thermique, générateur caractérisé en ce que ledit échangeur thermique est un condenseur constitué par un conduit de fumées pourvu intérieurement d'au moins une canalisation à eau disposée longitudinalement dans la région centrale et reliée à l'espace contenant le liquide à chauffer par deux ouvertures ménagées au travers de la paroi du conduit de fumée au voisinage de ses extrémités d'entrée et de sortie des fumées de combustion respectivement, et en ce que l'enceinte thermique à fond fermé comporte des turbulateurs plans placés transversalement à la direction de circulation des fumées de combustion.

Conformément à une réalisation particulière, la cloison séparant les deux compartiments constituant l'enceinte thermique est constituée par deux plaques métalliques parallèles et espacées entre elles, des ouvertures étant ménagées au travers de la paroi de cette enceinte à un niveau situé entre les deux plaques de manière à mettre le volume confiné entre ces deux plaques en communication avec l'espace de remplissage du liquide à chauffer.

Selon une réalisation préférée, le condenseur est situé en dessous et parallèlement à l'enceinte thermique et les deux compartiments constitutifs de cette enceinte sont superposés, le compartiment supérieur constituant la chambre de combustion et l'ouverture de sortie des fumées de combustion de l'enceinte étant ménagée à la partie inférieure du compartiment inférieur.

Conformément à une variante avantageuse, les canalisations internes du condenseur présentent sur leur surface extérieure des ailettes métalliques destinées à augmenter l'échange thermique avec les fumées.

Dans une autre forme de réalisation avantageuse, les turbulateurs sont constitués par des plaquettes métalliques ajourées montées amovibles et réglables en nombre et en position sur une tige support posée longitudinalement dans l'enceinte thermique et accessible par la porte de l'appareil.

Ces turbulateurs peuvent être placés dans la chambre de combustion ou dans le compartiment adjacent de retour des fumées, ou de préférence dans les deux à la fois, les turbulateurs de la chambre de combustion étant toutefois logés dans la partie arrière opposée au brûleur pour ne pas faire obstacle au développement normal de la flamme.

Selon une autre forme de réalisation, l'enceinte thermique principale est à fond plat pourvu de raidisseurs sur sa face intérieure au contact des fumées de combustion.

Comme on l'aura compris, la chaudière est conçue selon une architecture à trois étages de manière à former un circuit "gaz" en forme d'un "Z" que les fumées parcourent dans le sens de l'écriture habituelle de cette lettre de l'alphabet. La branche supérieure du "Z" constitue la chambre de combustion équipée du brûleur et dans laquelle l'échange s'opère essentiellement par rayonnement, d'abord par la flamme elle-même, puis par les gaz très chauds qui en sont issus. La branche inférieure est un récupérateur à tubes d'eau longitudinaux destinés à condenser la vapeur d'eau des fumées et à parfaire l'épuisement enthalpique des fumées avant leur entrée dans la cheminée d'évacuation à l'atmosphère. La branche intermédiaire joue le rôle d'une chambre de retour des fumées dans laquelle l'échange thermique est à la fois rayonnant et convectif.

En plus du condenseur à tubes d'eau longitudinaux et de la chambre de retour des fumées, laquelle permet une libre expansion de la flamme dans la chambre de combustion, il faut souligner l'importance décisive sur le rendement de la chaudière des turbulateurs plans placés au sein des deux chambres: turbulateurs radiatifs dans la partie arrière de la chambre de combustion, turbulateurs convectifs et radiatifs dans la chambre de retour des fumées. Ces turbulateurs se présentent préférentiellement sous l'aspect de plaquettes métalliques perforées pour le passage des gaz. Elles épousent à faible distance la forme de la paroi de la chambre dans laquelle elles se trouvent afin de ménager un passage pour les gaz et elles sont disposées perpendiculairement à l'axe des chambres et montées parallèlement les unes aux autres sur des tiges support filetées permettant aisément de faire varier leur nombre ou régler leur écartement pour optimiser leur effet sur l'échange thermique en fonction notamment de la puissance nominale de la chaudière.

Des exemples chiffrés donnés par la suite montreront mieux leur rôle déterminant.

L'invention sera bien comprise et d'autres aspects et avantages apparaîtront plus clairement au vu de la description qui suit donnée en référence aux planches de dessins annexées, sur lesquelles:
- la figure 1 représente schématiquement en coupe longitudinale selon le plan BB de la figure 2 une réalisation du générateur à condensation, adapté pour la production d'eau chaude sanitaire uniquement,
- la figure 2 montre une coupe transversale selon le plan AA de la figure 1,
- la figure 3 montre l'équipement mobile à turbulateurs plans règlables placé dans le fond de la chambre de combustion.

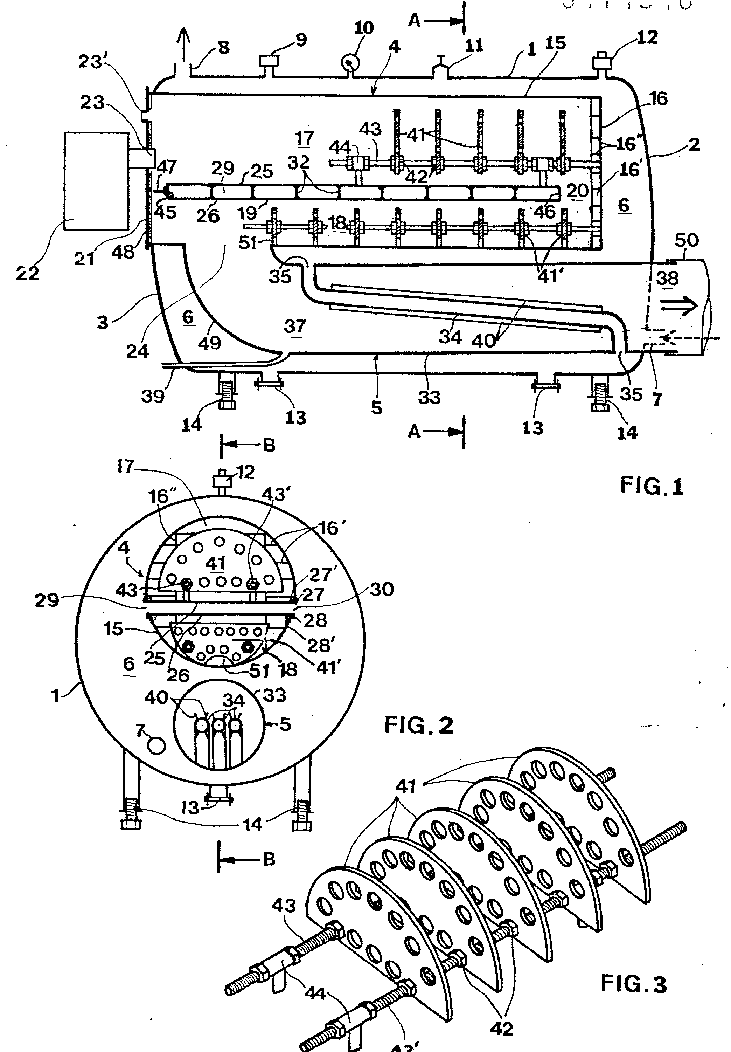

Comme on le voit plus particulièrement sur la figure 1, la chaudière comprend une enveloppe extérieure 1 en tôle, de forme générale cylindrique et fermée à ses deux extrémités par un fond 2 et une face avant 3.

Cette enveloppe entoure à distance une enceinte thermique principale 4 et un condenseur 5 situé en dessous de l'enceinte, tous deux de forme générale cylindrique et placés à l'horizontale dans

l'enveloppe. L'espace 6, défini entre l'enveloppe 1 d'une part et les éléments thermiques 4 et 5 d'autre part, est destiné à être rempli d'eau qui va se chauffer au contact des parois de ces éléments lorsque la chaudière est en service. L'enveloppe est pourvue d'une entrée d'eau froide 7 à la base du fond 2 et d'une sortie d'eau chauffée 8 à sa partie supérieure qui relie l'espace 6 au réseau de distribution d'eau chaude sanitaire à l'intérieur des locaux.

L'enveloppe 1 est également munie de façon classique d'appareils de contrôle en prise sur l'espace 6, à savoir un aquastat 9, un thermomètre 10, une soupape 11 de surpression ainsi que de moyens de maintenance: un purgeur d'air 12 et de deux vannes d'extraction 13, pour évacuer périodiquement les effluents qui se déposent dans le fond. Le tout est posé sur le sol par quatre pieds réglables 14.

On va maintenant décrire plus en détail l'enceinte thermique principale 4 et le condenseur 5.

L'enceinte thermique principale 4 est constituée d'un pot métallique 15 à fond plat fermé 16 pourvu sur sa surface intérieure de raidisseurs verticaux 16' et de raidisseurs horizontaux 16" qui, en plus de leur fonction de renfort, contribuent à favoriser les échanges thermiques.

Cette enceinte est divisée dans le sens longitudinal en deux compartiments adjacents superposés 17 et 18 par un organe de séparation 19 qui s'arrête avant le fond 16 afin de ménager à cet endroit, un passage 20 de communication entre les deux compartiments.

Le pot 15 est fermé sur sa face avant par une porte 21 montée sur charnières et pourvue de moyens de fixation d'un brûleur 22.

Un orifice 23 est prévu dans cette porte pour la mise en place du brûleur et la pénétration de la flamme dans le compartiment supérieur.

En outre, un oeilleton 23' y est également ménagé, muni d'un verre coloré pour l'observation visuelle de la flamme.

Le pot 15 comporte également, à la base de sa paroi latérale et au voisinage de la porte 21, une ouverture 24 pour la sortie des fumées de combustion hors de l'enceinte 4.

Dans l'exemple considéré, l'organe de séparation 19 est formé de deux plaques métalliques 25 et 26 parallèles, distantes l'une de l'autre de quelques centimètres.

La mise en place de ces plaques peut se faire aisément après avoir pratiqué dans la paroi du pot 15 deux lumières longitudinales 29, 30 de largeur voulue en regard l'une de l'autre. Chaque lumière s'arrête à une dizaine de centimètres du fond en raison du passage 20 en cet endroit et commence à quelques centimètres de la porte 21 pour ne pas nuire à la rigidité du pot. Les plaques 25 et 26 sont alors introduites au travers de l'une de ces lumières puis fixées par soudures 27, 27', 28 et 28' de leurs bords sur les lèvres intérieures et extérieures de chaque lumière pour assurer une parfaite étanchéité. Auparavant, on aura fixé, également par soudure étanche, les faces latérales d'extrémité 45 et 46 sur les petits côtés des plaques. De cette façon, le volume intérieur 31 délimité entre les plaques est mis en communication directe avec l'espace d'eau 6. Pour résister à la pression de l'eau qui tend à écarter ces plaques l'une de l'autre, un cloisonnage de renfort interne a été prévu au moyen de plaquettes parallèles 32 placées sur chant et fixées aux plaques 25 et 26, par-exemple par soudage. Par ailleurs, à l'extrémité avant du pot 15, un fer plat 47 a été fixé à l'horizontale par soudure sur la surface extérieure de la face d'extrémité 45 de manière à être pressée contre la garniture en amiante 48 prévue sur la surface intérieure de la porte 21, lorsque celle-ci est verrouillée et empêcher ainsi à cet endroit, toute fuite de gaz chauds de la chambre de combustion 17 vers le compartiment inférieur 18.

Le condenseur 5 est constitué essentiellement d'un conduit principal métallique 33 pour le passage des fumées dont l'extrémité 37, tournée vers l'avant, est reliée à l'ouverture 24 de sortie des fumées du pot 15 par un coude soudé 49 et dont l'autre extrémité 38 débouche à l'extérieur de l'enveloppe 1 en vue d'être reliée par un manchon 50 à la cheminée (non représentée) d'évacuation des fumées à l'atmosphère.

Le conduit 33 est pourvu intérieurement de tubes métalliques 34 (trois dans l'exemple décrit) de section intérieure petite par rapport à celle du conduit 33 (par-exemple dans un rapport de 1 à 100) et disposés longitudinalement dans la région centrale de ce conduit.

Ces tubes servent à une circulation de l'eau à chauffer et, à cet effet, ils sont chacun coudés aux extrémités pour être reliés

0171340

à l'espace 6 par deux ouvertures 35 et 36 ménagées au travers de la paroi du conduit principal 33 au voisinage de ses extrémités d'entrée 37 et de sortie 38 des fumées de combustion respectivement.

Comme on le voit, le condenseur est en position légèrement inclinée sur l'horizontale et une canalisation de décharge 39 est prévue au point le plus bas du condenseur pour permettre l'évacuation des condensats qui se forment lors du refroidissement des fumées.

Au contraire, les tubes internes 34 sont avantageusement inclinés dans le sens inverse de l'écoulement dans le condenseur pour favoriser l'évacuation des bulles d'air qui pourraient éventuellement se former dans ces tubes.

Pour plus de détails sur la conception et la réalisation du conduit 33 et de ses tubes centraux 34, on pourra se reporter à la description du récupérateur de chaleur donnée dans la demande de brevet européen publiée sous le numéro 0051036, au nom de l'Inventeur.

Des ailettes longitudinales 40 ont été prévues sur les parties rectilignes des tubes 34, à raison de quatre ailettes par tube, pour accroître encore la surface d'échange thermique avec les fumées à refroidir.

Conformément à une caractéristique importante de l'invention des turbulateurs plans sont prévus sur le passage des fumées dans l'enceinte thermique 4. Dans l'exemple représenté sur les figures, ces turbulateurs sont constitués par des plaquettes métalliques 41 parallèles entre elles transversalement à la chaudière 17 et logés dans la demi partie arrière de cette chambre.

Ces plaquettes sont conformées en demi lune afin d'épouser la forme intérieure de la chambre de combustion. Leur taille est cependant déterminée de manière à ménager entre la paroi de la chambre et chaque plaquette un espace pour le passage des fumées. Dans le même but, les plaquettes sont ajourées par des perforations opérées sur le pourtour.

Ces turbulateurs jouent un double rôle: elle prolonge le régime turbulent d'écoulement des fumées après la flamme, ce qui est favorable à un meilleur échange thermique par convection. En outre, elles constituent des éléments rayonnants en raison de la forte température des fumées qui les chauffent à cet endroit.

0171340

A cet effet, leur contact avec les parois de l'enceinte est de préférence évité pour minimiser les courts circuits thermiques. Ceci est obtenu grâce à un montage des plaquettes sur deux tiges filetées parallèles longitudinales 43, 43' auxquelles elles sont fixées par des écrous 42. L'ensemble est introduit dans le fond de la chambre 17 par l'avant de la chaudière et repose sur la plaque 25 par l'intermédiaire de manchons à pied 44.

Le positionnement est assuré par l'extrémité des tiges venant en butée contre le fond 16 du pot 15 et ces tiges se prolongent suffisamment vers l'avant pour pouvoir être saisies et manipulées aisément après ouverture de la porte 21.

La fixation des plaquettes par les écrous 42 permet un réglage de leur écartement ainsi que de leur nombre en fonction de la longueur de la zone arrière de la chambre 17 laissée libre par la flamme.

Ces plaquettes sont en acier réfractaire de trois millimètres d'épaisseur par-exemple et leur espacement est typiquement de l'ordre d'un dizaine de centimètres.

Comme on le voit sur les figures 1 et 2, on a avantage à placer des turbulateurs 41' également dans le compartiment inférieur 18 de retour des fumées. Dans ce cas, les manchons à pied 44 sont inutiles, les plaquettes 41' pouvant reposer par leur bord sur le fond concave du compartiment. Toutefois, des échancrures 51 peuvent être avantageusement prévues en cet endroit sur les plaquettes pour minimiser les surfaces de contact, d'une part, et permettre d'autre part, l'écoulement des éventuels condensats qui pourraient se former déjà dans ce compartiment: la présence de ces turbulateurs plans amovibles et réglable a un autre avantage très appréciable; avec un format unique de chaudière, on peut, tout en conservant un rendement thermique toujours optimal, réaliser un appareil adapté à une très large gamme de puissances grâce au simple réglage du nombre et de l'écartement des plaquettes 41 et 41'. Ainsi, la chaudière exemplifiée ci-avant, peut parfaitement fonctionner dans une plage de puissance allant de 30 à 90 kW.

Le principe de fonctionnement d'une telle chaudière est le suivant:

Le mélange combustible – air comburant amené par le brûleur s'enflammme au niveau de l'ouverture 23. La flamme rayonnante se développe alors librement sur la moitié ou plus de la profondeur du compartiment supérieur 17 sans être bridée par les fumées de combustion en retour. Dans la partie arrière, l'échange thermique au travers des parois s'opère, d'une part, par rayonnement et convection des fumées très chaudes maintenues en régime d'écoulement turbulent grâce aux plaquettes ajourées et, d'autre part, par rayonnement des plaquettes elles-mêmes portées à haute température et même jusqu'à rougissement pour la plaquette directement exposée à la flamme (voire la ou les deux plaquettes suivantes). Les fumées passent ensuite dans le compartiment inférieur 18 grâce au passage 20. Ces fumées encore très chaudes circulent alors de la partie arrière vers la face avant de la chaudière le long du compartiment inférieur où elles cèdent une grande partie de leur chaleur à l'eau environnante au travers des parois métalliques 25', 26 selon un processus d'échange analogue à celui dans la chambre 17 mais où la part du rayonnement baisse au profit de celle prise par la convection.

Ensuite, les fumées quittent le pot 15 par l'ouverture 24 et pénètrent dans le conduit 33 du condenseur 5 où elles circulent cette fois de l'avant vers l'arrière pour atteindre l'extrémité de sortie 38 sur la face arrière de la chaudière.

Dans le condenseur, les fumées se refroidissent jusqu'à condensation en cédant leur chaleur à l'eau à chauffer selon un double mécanisme: l'eau environnante dans l'espace 6 prend les calories présentes à la périphérie de la veine de fumées, alors que l'eau circulant dans les tubes longitudinaux 34 va chercher les calories dans la partie centrale de la veine .

L'échange de chaleur s'établit bien entendu selon le principe des échangeurs à flux séparés au travers de la paroi du conduit 33 et de celle des tubes 34 pourvus des ailettes 40.

Dans l'exemple de réalisation décrit, l'eau froide pénétrant dans l'espace 6 par l'entrée 7 située au voisinage de l'extrémité de sortie des fumées 38, l'eau circule dans les tubes 34 et autour du conduit 33 à contre courant des fumées, ce qui améliore les transferts thermiques.

On observera que dans l'exemple de réalisation décrit, l'eau à chauffer, qui progresse dans l'espace 6 depuis l'entrée basse 7 jusqu'à la sortie haute 8, circule donc globalement au sein de l'appareil à contre-courant du courant thermique à refroidir dont la température va en diminuant depuis la zone de flamme jusque dans la partie terminale 38 du conduit 33 en parcourant, du haut vers le bas selon une circulation en "Z", l'architecture à trois étages superposés: compartiment supérieur 17, compartiment inférieur 18 et condenseur 5.

On aura compris que le compartiment supérieur 17 dans lequel se développe la flamme constitue donc la chambre de combustion de la chaudière, alors que le compartiment inférieur 18 joue le rôle d'une chambre d'échange thermique fumées / eau par transfert de la majeure partie de la chaleur sensible des fumées, le reste, ainsi qu'une part importante de la chaleur latente, étant ensuite récupérés dans le condenseur 5.

Bien entendu, selon les conditions opératoires (puissance du brûleur-dimension de la chaudière) la flamme peut se propager sur une longueur plus ou moins grande selon la puissance du brûleur. Toutefois, la flamme restera limitée à une partie du compartiment 17, auquel cas la partie arrière restante constituera une première chambre d'échange thermique fumée/eau préalable à la chambre d'échange thermique principale 18. Néanmoins, pour des raisons de commodités, on convient de qualifier "chambre de combustion, le compartiment 17 quelque soit l'ampleur de la flamme qui y est formée.

Une chaudière expérimentale a été construite selon les spécifications suivantes:
- enveloppe 1: longueur totale 125 cm - diamètre: 70 cm
- pot 15: longueur 110 cm - diamètre: 36 cm
- condenseur 5: tube de fumée 33: longueur: 100 cm - diamètre: 2 cm
   tube à eau 34: longueur 100 cm - diamètre 2 cm
- cloison séparatrice 19: position paroi inférieure 26: 1/3 du diamètre du pot 15 - espacement inter paroi 25,26: 3 cm
- plaquettes 41: nombre: cinq - forme: demi lune - base: 34 cm - hauteur: 18 cm - perforations: dix par plaquettes, 2 cm de diamètre
- plaquettes 41': nombre: huit - forme: demi lune - base: 30 cm hauteur: 11 cm - perforation: onze par plaquette, 1 cm de diamètre

0171340

Tous ces éléments, en dehors de l'enveloppe 1, sont en acier inoxydable de 3 mm d'épaisseur soumis après découpe et mise en forme à un décapage suivi d'un passivage. L'enveloppe 1 est en acier ordinaire de 4 mm d'épaisseur.

Cette chaudière alimentée au fuel oil développe une puissance de 46 kW environ.

La température de l'eau progresse de 12°C à 50°C entre l'entrée 7 et la sortie 8 sous un débit nominal légèrement supérieur à 1 m$^3$/h.

Celle des fumées passe de 1200°C environ dans la flamme à 110°C environ au niveau de l'extrémité de sortie 24 du pot 15, puis chute progressivement jusqu'à 55°C à l'extrémité de sortie 38 du condenseur.

Au cours du fonctionnement, la flamme s'étendait sur un peu plus de la moitié du compartiment 17.

Des essais complémentaires ont montré:

- que sans turbulateurs , la température se sortie des fumées s'élevait à plus de 225-C;
- qu'avec des turbulateurs uniquement dans le compartiment 18 de retour des fumées, cette température avoisinait 100 °C;
- alors qu'avec des turbulateurs uniquement dans la chambre de combustion 17, cette température atteignait 150°C environ.

Il va de soi que l'invention nè saurait se limiter à l'exemple décrit, mais elle s'étend à de multiples variantes ou équivalents dans la mesure où sont respectées les caractéristiques énoncées dans les revendications jointes.

Ainsi, l'appareil précédemment décrit peut aisément être converti en chaudière de chauffage central moyennant de légères modifications:

- suppression des vannes d'extraction 13;
- remplacement de la sortie d'eau chaude supérieure 8 par une sortie classique à la partie haute de la même face que l'entrée d'eau froide 7, à savoir la face arrière 2, cette sortie étant précédée par un tube de prélèvement horizontal à l'intérieur de l'espace 6 et qui débouche dans cet espace au voisinage de la face avant;
- ajout d'un boisseau de vidange à la partie inférieure de la face avant.

0171340

De même, dans le condenseur 5, le nombre des conduits centraux 34 peut être très variable dans la mesure où ils demeurent disposés longitudinalement dans le conduit principal 33, afin, d'une part, de réduire les pertes de charge de l'écoulement des fumées et, d'autre part, d'assurer une circulation en flux parallèles entre ces fumées et l'eau dans les conduits.

De même encore, les turbulateurs peuvent présenter d'autres formes de réalisation que celle décrite précédemment, dans la mesure où leur fonction de rayonnement et d'entretien d'un régime d'écoulement turbulent des fumées est maintenue.

De même, l'organe 19 séparant le pot 15 en deux compartiments peut être formé d'une simple paroi. On optera toutefois de préférence pour un dispositif à circulation d'eau interne pour favoriser les échanges thermiques.

D'autres variantes de même type peuvent être retenués, par-exemple un caisson préformé de part et d'autre duquel viennent se fixer des enveloppes arquées pour former les deux compartiments: la chambre de combustion 17 et la chambre thermique 18.

Par ailleurs, bien que l'architecture décrite à trois étages thermiques superposés 17, 18, 33 apparaît comme la plus rationnelle, elle n'est pas pour autant limitative de l'invention.

Par-exemple, le conduit 33 du condenseur peut être remplacé n'importe où autour du pot 15, par-exemple sur le dessus ou sur l'un des côtés.

De même, les turbulateurs plans peuvent être montés non seulement sur les tiges filetées 43 mais sur tout autre support pouvant être posé dans l'enceinte thermique et enlevable à volonté.

Enfin, il est clair que l'appareil selon l'invention est également utilisable pour le chauffage de liquides autres que de l'eau, l'exemple de l'eau n'ayant été choisi dans l'exposé que par commodité et en raison de l'usage général qui en est fait dans le domaine technique de l'invention.

0171340

## REVENDICATIONS

1) Générateur d'eau chaude à condensation à brûleur à air pulsé comprenant une chambre de combustion suivie d'un échangeur de chaleur et une enveloppe extérieure entourant à distance la chambre de combustion et l'échangeur pour définir un espace destiné à contenir le liquide à chauffer, générateur dans lequel la chambre de combustion constitue un premier compartiment d'une enceinte thermique à fond fermé composée de deux compartiments adjacents séparés par une cloison longitudinale qui s'arrête avant le fond de l'enceinte thermique de manière à ménager entre ledit fond et l'extrémité de la cloison un passage de communication des fumées entre les deux compartiments, le second compartiment constituant une chambre de retour des fumées de combustion et dans lequel l'enceinte thermique comporte, à l'extrémité opposée du fond fermé, une ouverture dans la chambre de combustion pour l'installation du brûleur et dans l'autre compartiment une ouverture de sortie pour le passage des fumées de combustion vers l'échangeur thermique, générateur caractérisé en ce que ledit échangeur thermique (5) est un condenseur constitué par un conduit de fumées (33) pourvu intérieurement d'au moins une canalisation à eau (34) disposée longitudinalement dans la région centrale et reliée à l'espace (6) contenant le liquide à chauffer par deux ouvertures (35 et 36) ménagées au travers de la paroi du conduit de fumées au voisinage de ses extrémités d'entrée (37) et de sortie (38) des fumées de combustion respectivement, et en ce que l'enceinte thermique (4) à fond fermé (16) comporte des turbulateurs (41) placés transversalement à la direction de circulation des fumées de combustion.

2) Générateur selon la revendication 1 caractérisé en ce que les turbulateurs sont placés dans la chambre de combustion (17) et/ou dans la chambre (17) de retour des fumées de combustion.

3) Générateur selon la revendication 1 ou 2 caractérisé en ce que les turbulateurs sont constitués par des plaquettes ajourées (41, 41') disposées parallèlement les unes à la suite des autres et montées sur un support (43, 44) posé dans l'enceinte thermique.

4) Générateur selon la revendication 3 caractérisé en ce que lesdits supports sont constitués par des tiges filetées (43) auxquelles les plaquettes (41, 41') sont fixées par vissage.

5) Générateur selon la revendication 1 caractérisé en ce que la cloison (19) séparant les deux compartiments adjacents (17, 18) constitutifs de l'enceinte thermique (4) est un corps thermoconducteur creux présentant des ouvertures latérales (29, 30) pour mettre en communication le volume interne dudit corps avec l'espace (6) contenant l'eau à chauffer.

6) Générateur selon la revendication 5 caractérisé en ce que ledit corps thermoconducteur est une plaque métallique à double parois parallèles (25 et 26) fixée par les bords contre la surface intérieure de l'enceinte thermique (4).

7) Générateur selon la revendication 1 caractérisé en ce que le condenseur (5) est situé en dessous de l'enceinte thermique (4).

8) Générateur selon la revendication 1 caractérisé en ce que des ailettes longitudinales (40) d'échange thermique sont prévues sur la surface extérieure des canalisations à eau (34) du condenseur.

9) Application du générateur selon la revendication 1 en tant que chaudière de chauffage central.

10) Application du générateur selon la revendication 1 en tant que chauffe eau sanitaire et caractérisé en ce que des vannes d'extraction (15) sont prévues à la base de l'enveloppe (1).

P.L. UNIQUE

0171340

FIG.1

FIG.2

FIG.3

Office européen
des brevets

**RAPPORT DE RECHERCHE EUROPEENNE**

EP  85 44 0040

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-E-  90 607  (IDEAL-STANDARD)<br>* Figures 9,10 *<br><br>--- | 1,5,6 | F 24 H    1/44<br>F 24 H    9/00 |
| A | FR-A-  174 226  (BARATA)<br>* Figure 12 *<br><br>--- | 1 | |
| A | BE-A-  651 186  (AKTIEBOLAGET<br>SVENSKA MASKINVERKEN)<br>* Figures 9,10,18 *<br><br>--- | 1,8 | |
| A | LU-A-   54 249  (VIESSMAN)<br>* Figures 1,2 *<br><br>----- | 2,3 | |

|  | DOMAINES TECHNIQUES RECHERCHES (Int. Cl.4) |
|---|---|
| | F 24 H |

Le présent rapport de recherche a été établi pour toutes les revendications

| Lieu de la recherche | Date d'achèvement de la recherche | Examinateur |
|---|---|---|
| LA HAYE | 20-09-1985 | VAN GESTEL H.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82